# EUROPEAN PATENT APPLICATION

(11) **EP 3 668 209 A1**
(43) Date of publication of application: **17.06.2020**
(21) Application number: 18844614.0
(22) Date of filing: 04.06.2018
(51) Int. Cl.: H04W 72/02, H04W 72/04, H04W 84/00, H04W 88/06, H04L 29/06

(54) **BUS COMMUNICATION NETWORK WIRELESS BACKHAUL SYSTEM USING MOBILE TVWS AND OPERATING METHOD THEREOF**

(30) Priority: 08.08.2017 KR 20170100177
(71) Applicant: Innonet Co., Ltd., Seoul 05836 (KR)
(72) Inventor: YOO, Ho Sang, Seoul 08646 (KR); YOO, Woo Sung, Seoul 05794 (KR); SEO, Ji Hwan, Seoul 05837 (KR); PARK, Yong Dae, Busan 47894 (KR)
(74) Representative: Viering, Jentschura & Partner mbB Patent- und Rechtsanwälte
(86) International application number: PCT/KR2018/006366
(87) International publication number: WO 2019/031695

(57) **Abstract**

The present disclosure relates to a wireless backhaul system which may provide a wireless backhaul for a bus communication network using a portable TVWS communication device and an operating method thereof. A wireless backhaul system using TVWS band to provide data communication to a bus using a TV white space (TVWS) band includes a TVWS DB server which provides available TVWS channel information based on location information; a plurality of master portable TVWS devices which is installed along a route of the bus; and one or more slave portable TVWS devices installed in the bus, the master portable TVWS device obtains location information, provides the obtained location information to the TVWS DB server to receive available TVWS channel information, selects a TVWS channel to be used based on the available TVWS channel information, and performs data transmission with the slave portable TVWS devices using the selected TVWS channel, and the slave portable TVWS device performs a data service to the information communication apparatus in the bus and performs data communication with the master portable TVWS device using a TVWS channel selected by the master portable TVWS device. According to the present disclosure, a wireless backhaul system using a TVWS communication is provided to provide a data communication service to an information communication device of a bus.

## Description

### CROSS-REFERENCE TO RELATED APPLICATIONS

This application claims the priority of Korean Patent Application No. 10-2017-0100177 filed on August 8, 2017, in the Korean Intellectual Property Office, the disclosure of which is incorporated herein by reference.

### BACKGROUND

### Field

The present disclosure relates to a wireless backhaul system for a bus communication network using a portable TVWS communication device and an operating method thereof, and more particularly to a bus communication network wireless backhaul system using a portable TVWS which is configured using master and slave portable TVWS devices which perform TVWS communication to provide an Internet service to an information communication apparatus and Wi-Fi AP installed in a bus and an operating method thereof.

### Description of the Related Art

Recently, there is a convenient service in that all buses in a big city are included in a smart traffic control system so that their locations are transmitted to a central server and the central server notifies bus users of bus arrival times based on the location information.

However, in order to provide such a service, data communication between the bus and the central server needs to be established. In order for a moving bus to use a data communication service, the moving bus may use the data communication service only wirelessly. Therefore, currently, a mobile communication system such as LTE, 3G, or WiBro is used as a wireless backhaul for data transmission. However, since a monthly usage fee needs to be paid for the system, a pay mobile communication system may incur an excessive operating system.

In order to solve the above-mentioned problem, wireless WiFi may be an alternative. However, in the case of a fixed wireless WiFi, a separate control function is not required. In contrast, in the case of a mobile wireless WiFi which is installed in the bus, additional control functions are required, which may incur tens of billions of won every year.

As an alternative for minimizing the above-described operating cost, a wireless backhaul using a television white space (TVWS) band has been suggested.

### SUMMARY

An object of the present disclosure is to provide a wireless backhaul system for a data communication of a bus communication network using a TVWS band communication.

Further, another object of the present disclosure is to provide an implemented configuration of each TVWS device in a wireless backhaul system using the TVWS and an operating method of each TVWS device.

An exemplary embodiment of the present invention provides a wireless backhaul system using TVWS band to provide data communication to a bus using a TV white space (TVWS) band including: a TVWS DB server which provides available TVWS channel information based on location information; a plurality of master portable TVWS devices which is installed along a route of the bus; and one or more slave portable TVWS devices installed in the bus. The master portable TVWS device obtains location information, provides the obtained location information to the TVWS DB server to receive available TVWS channel information, selects a TVWS channel to be used based on the available TVWS channel information, and performs data transmission with the slave portable TVWS devices using the selected TVWS channel. The slave portable TVWS device provides a data service to the information communication apparatus in the bus and performs data communication with the master portable TVWS device using a TVWS channel selected by the master portable TVWS device.

Here, the master portable TVWS device may include: a TVWS interface which performs data transmission and reception with the slave portable TVWS device using a TVWS channel; a network interface which is connected to a TCP/IP network to perform data communication; a GPS module which obtains location information based on a received GPS signal; and a CPU which controls an operation of the master portable TVWS device and relays data transmission between the TVWS interface and the network interface. The master portable TVWS device may further include a WiFi interface which performs a WiFi AP function and performs data communication with a WiFi terminal.

The slave portable TVWS device may include: one or more TVWS interfaces which perform data transmission and reception with at least one of the plurality of master portable TVWS devices using a TVWS channel; a serial interface which provides a data service to the information communication apparatus in the bus; a LAN interface which provides a data service to the information communication apparatus in the bus; and a CPU which manages the slave portable TVWS device and relays data transmission between one or more TVWS interfaces, the serial interface, and the LAN interface . The CPU may select one of the one or more TVWS interfaces based on a quality of a channel used by each of the one or more TVWS interfaces to transmit data to the selected TVWS interface but not transmit data to the remaining TVWS interfaces.

According to another aspect of the present disclosure, the slave portable TVWS device includes: one or more TVWS modules which perform data transmission and reception with one of the plurality of master portable TVWS devices using a TVWS channel; a router which provides one or more LAN interfaces providing a data service to the information communication apparatus in the bus and performs data routing between the one or more TVWS modules, the one or more LAN interfaces, and the CPU; and a CPU which manages the slave portable TVWS device, provides a serial interface providing a data service to the information communication apparatus in the bus, and manages the routing of the router. Each of the one or more TVWS modules may include a TVWS interface which performs data transmission and reception using a TVWS channel and a local CPU which processes a TCP/IP protocol. The CPU may manage the routing of the router such that one of the one or more TVWS modules is selected based on a quality of a channel used by each of the one or more TVWS modules to transmit data to the selected TVWS module but not to transmit data to the remaining TVWS modules.

Further, the master portable TVWS device may measure a received signal strength indication (RSSI) for each of available channels obtained from the TVWS DB server and select an available channel having the smallest received signal strength indication as a TVWS channel to be used or obtain TVWS channel information to be used from another master portable TVWS device of the plurality of master portable TVWS devices and select one available channel among the remaining channels excluding a TVWS channel used by another master portable TVWS device from the available channels obtained from the TVWS DB server as a TVWS channel to be used. When the wireless backhaul system using the TVWS includes an NMS server which determines a TVWS channel to be used by the plurality of master portable TVWS devices, the master portable TVWS device may transmit the available channel information received from the TVWS DB server to the NMS server and select a TVWS channel which is determined and transmitted by the NMS server as the TVWS channel to be used.

The wireless backhaul system using TVWS may further include an L3 switch which selects one of the plurality of master portable TVWS devices which performs data relay between the slave portable TVWS device and the TVWS DB server. The L3 switch may store a master portable TVWS device used by the slave portable TVWS device based on data transmitted from the slave portable TVWS device and select the stored master portable TVWS device as a master portable TVWS device which performs data relay between the slave portable TVWS device and the TVWS DB server.

According to another aspect of the present disclosure, a method of selecting a TVWS channel to be used by a master portable TVWS device in the wireless backhaul system according to claim 1 includes: obtaining location information of the master portable TVWS device; obtaining available channel information in accordance with the location information; measuring a received signal strength indication for each of the obtained available channels; and selecting an available channel having the smallest measured received signal strength indication as a TVWS channel to be used.

In this case, the obtaining of available channel information in accordance with the location information may include transmitting the location information to a TVWS DB server; and receiving the available channel information from the TVWS DB server.

Another method of selecting a TVWS channel to be used by a master portable TVWS device in the wireless backhaul system according to claim 1 includes: obtaining location information of the master portable TVWS device; obtaining available channel information in accordance with the location information; obtaining used channel information of other master portable TVWS device in the wireless backhaul system according to claim 1; measuring a received signal strength indication for each of the remaining available channels excluding a channel used by the other master portable TVWS device from the available channels; and selecting an available channel having the smallest measured received signal strength indication as a TVWS channel to be used.

A method of selecting a TVWS channel to be used by a master portable TVWS device in the wireless backhaul system according to claim 8 includes: obtaining location information of the master portable TVWS device; obtaining available channel information in accordance with the location information; transmitting the available channel information to an NMS server; selecting a channel to be used by the master portable TVWS device based on the available channel information and a channel used by another master portable TVWS device in the wireless backhaul system according to claim 8, by the NMS server; transmitting a selected channel to be used by the master portable TVWS device, by the NMS server; and selecting the transmitted channel as a TVWS channel to be used. The method may further include measuring a received signal strength indication for each of the obtained available channels. The transmitting of the available channel information to an NMS server may include transmitting the available channel information and the received signal strength indication measured for every available channel to the NMS server. The selecting of a channel to be used by the master portable TVWS device, by the NMS server may include: selecting an available channel having the smallest received signal strength indication measured for each of the remaining available channels excluding a channel used by another master portable TVWS device from the available channels as a channel to be used by the master portable TVWS device.

According to another aspect of the present disclosure, a method of selecting a master portable TVWS device which performs data relay between a slave portable TVWS device and a TVWS DB server in an L3 switch, in the wireless backhaul system according to claim 9 includes: storing a master portable TVWS device (hereinafter, referred to as a first master portable TVWS device) used for data transmission by each slave portable TVWS device based on data transmitted from each slave portable TVWS device; selecting the stored first master portable TVWS device as a master portable TVWS device which performs data relay between a slave portable TVWS device and a TVWS DB server; and storing and updating a second master portable TVWS device when the master portable TVWS device (hereinafter, the second master portable TVWS device) used for data transmission by each slave portable TVWS device is different from the first master portable TVWS device based on data transmitted from the slave portable TVWS device.

According to the present disclosure, a wireless backhaul system using a TVWS communication is provided to provide a data communication service to an information communication device of a bus.

According to the present disclosure, a data communication service of a bus is provided at a considerably low operating cost as compared with the existing wireless WiFi system or a mobile communication system such as LTE or 3G.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a view illustrating a configuration of a wireless backhaul system for providing a data service to a bus according to an exemplary embodiment of the present disclosure;
FIG. 2 is a view illustrating a configuration of master portable TVWS devices 300 to 304 according to an exemplary embodiment of the present disclosure;
FIG. 3 is a view illustrating a configuration of slave portable TVWS devices 400 and 401 according to an exemplary embodiment of the present disclosure;
FIG. 4 is a view illustrating a configuration of slave portable TVWS devices 400 and 401 according to an exemplary embodiment of the present disclosure;
FIG. 5 is a view illustrating a method of selecting a channel to be used by a master portable TVWS device according to an exemplary embodiment of the present disclosure;
FIG. 6 is a view illustrating a method of selecting a channel to be used by a master portable TVWS device according to another exemplary embodiment of the present disclosure;
FIG. 7 is a view illustrating a method of selecting a channel to be used by a master portable TVWS device according to still another exemplary embodiment of the present disclosure;
FIG. 8 is a view illustrating a configuration of a wireless backhaul system including an L3 switch for hand-over according to an exemplary embodiment of the present disclosure; and
FIG. 9 is a view illustrating a method of performing handover in a wireless backhaul system according to an exemplary embodiment of the present invention.

### DETAILED DESCRIPTION OF THE EMBODIMENT

In order to clearly describe the present disclosure, parts not related to the description will be omitted. Like reference numerals designate like elements throughout the specification.

Throughout this specification and the claims that follow, when it is described that an element is "coupled" to another element, the element may be "directly coupled" to the other element or "electrically coupled" to the other element through a third element. In addition, unless explicitly described to the contrary, the word "comprise" and variations such as "comprises" or "comprising", will be understood to imply the inclusion of stated elements but not the exclusion of any other elements.

It will be understood that when an element is referred to as being "on" or "over" another element, it can be directly on the other element or intervening elements may also be present. In contrast, when an element is referred to as being "directly on" other element, other element is not interposed between the elements.

Terms such as first, second, and third are used to illustrate various portions, components, regions, layers and/or sections, but not limit them. These terms are used to discriminate the portions, components, regions, layers or sections from the other portions, components, regions, layers or sections. Therefore, the first portion, component, region, layer or section as described below may be the second portion, component, region, layer or section within the scope of the present invention.

It is to be understood that the terminology used therein is for the purpose of describing particular embodiments only and is not intended to be limiting. It must be noted that, as used in the specification and the appended claims, the singular forms include plural references unless the context clearly dictates otherwise. It will be further understood that the terms "comprises" and/or "comprising," when used in this specification, specify the presence of stated properties, regions, integers, steps, operations, elements, and/or components, but do not preclude the presence or addition of one or more other properties, regions, integers, steps, operations, elements, and/or components thereof.

Terms representing relative space such as "below" or "on" may be used to more easily describe the relationship of one part illustrated in the drawing with respect to another part. These terms are intended to include other meanings or operations of a device in use together with the meanings intended in the drawings. For example, when a device in the drawing is reversed, parts described to be "below" other parts may be described to be "on" the other parts. Therefore, an exemplary term of "below" includes both upper and lower directions. The device may rotate at 90° or other angle so that terms representing a relative space may be interpreted correspondingly.

Unless defined otherwise, all terms including technical and scientific terms used here have the same meaning as commonly understood by those skilled in the art to which this invention belongs. The terminologies that are defined previously are further understood to have the meaning that coincides with the contents that are disclosed in relating technical documents, but not as the ideal or very official meaning unless it is not defined.

The present invention will be described more fully hereinafter with reference to the accompanying drawings, in which exemplary embodiments of the invention are shown. However, the present invention can be realized in various different forms, and is not limited to the exemplary embodiments described herein.

Before describing the present disclosure in detail, a TVWS band communication will be summarized.

TVWS is defined as an empty channel which is not temporally and spatially used in a TV band. As frequencies at which the TVWS is included, frequencies are defined only in a band of 470 to 698 MHz (UHF) in Korea, but are defined in a band of 54 to 216 MHz and 470 to 698 MHz including a VHF band in the United States. As described above, data communication using an empty channel of a TV band is referred to as TVWS communication.

Since TVWS communication shares a TV band, a regulatory authorities have defined a database connection condition for checking technical standards and available channels for a TVWS device using TVWS.

The TVWS device is classified into a fixed TVWS device and a portable TVWS device. The fixed TVWS device transmits data at a power of 30 dBm/6 MHz and 33 dBm/12 MHz and TVWS available channel information needs to be allocated from a TVWS database server based on a location. The portable TVWS device transmits data at a maximum power of 100 mW/6 MHz in a channel 6 MHz or more spaced from the broadcasting band or at a maximum power of 40 mW/ 6 MHz in a channel adjacent to the broadcasting band. The TVWS available channel information of the portable TVWS device needs to be received from the fixed TVWS device or allocated from the TVWS database server based on the location.

A device which accesses the TVWS database server has an automatic measuring function and the user cannot arbitrary modify the location information. Further, it is defined that when a power is reapplied and the location is changed more than 100 meters from the last location where channel information in use is received, a portable TVWS device which accesses the database is required to have a function of rediscovering available channels.

However, in the case of busy urban areas, it is difficult to secure TVWS available channels for a fixed TVWS device but the TVWS available channels for a portable TVWS device can be secured. Therefore, as a TVWS device used to provide a wireless backhaul system for a bus communication system, a portable TVWS can be desirably used.

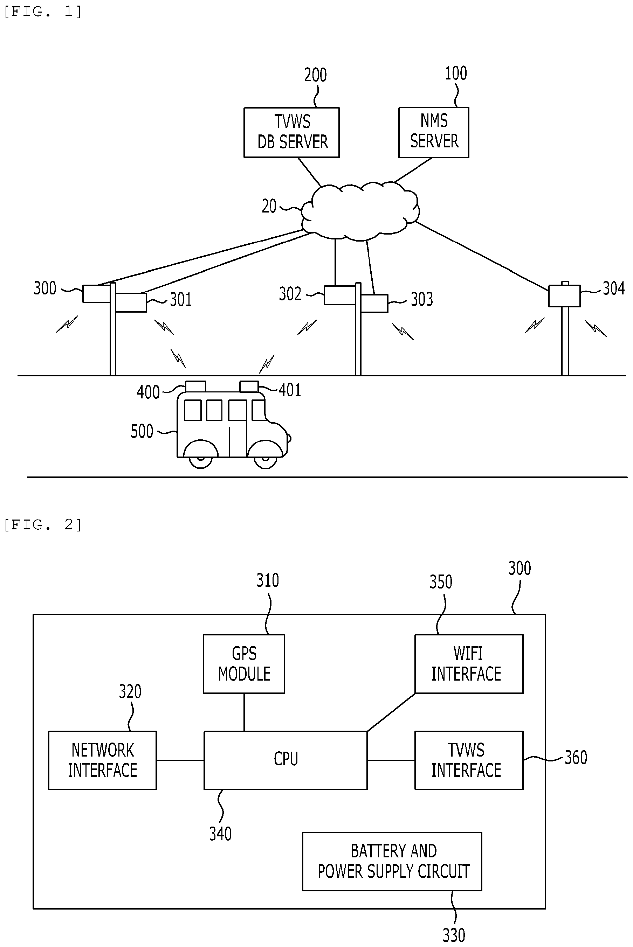

FIG. 1 is a view illustrating a configuration of a wireless backhaul system for providing a data service to a bus according to an exemplary embodiment of the present disclosure.

Referring to FIG. 1, a wireless backhaul system for providing a data service to a bus includes an NMS server 100, a TVWS DB server 200, a plurality of master portable TVWS devices 300 to 304, and one or more slave portable TVWS devices 400 and 401 attached to the bus (500), which are connected to each other through a TCP/IP network.

The plurality of master portable TVWS devices 300 to 304 may be installed at bus stops or at certain distances . Specifically, directional antennas may be used to route signals toward a road where the buses travel. The master portable TVWS devices 300 to 304 may be connected to the TCP/IP network 20 regardless of a communication method such as wide area network (WAN) or mobile communication. In order to secure a channel to be used for TVWS communication, the master portable TVWS device includes a GPS therein to obtain location information, transmits the location information to the TVWS DB server 200 connected thereto through the TCP/IP network 20, and obtains available channel information based on the location information transmitted from the TVWS DB server 200.

Each of the plurality of master portable TVWS devices 300 to 304 obtains available channel information from the TVWS DB server 200 and selects a channel to be used among the available channel information. For example, a channel having the smallest received signal strength indicator (RSSI) among the available channels may be used as a channel for data transmission.

The TVWS device needs to perform data communication using only an unused channel other than TV channels used for broadcasting in a region where the TVWS device is located. Therefore, regulatory authorities suggest technique standards and TVWS available channel database access conditions of the portable TVWS devices. According to regulations of the regulatory authorities, an error between a measured location and an actual location of the portable TVWS device needs to be within 50 m and available channel information needs to be newly obtained every 60 seconds except for the sleep mode and when the portable TVWS device moves more than 100 m from the current location. In accordance with the regulation of the regulatory authorities, since the master portable TVWS devices 300 to 304 are fixed, the location is not changed so that in order to newly obtain available channel information every 60 seconds, the location information needs to be transmitted to the TVWS DB server 200.

Specifically, when channels to be used by the master portable TVWS devices 300 to 304 are selected, in order to prevent the collision between selected channels due to a hidden node problem, the NMS server 100 connected to the TCP/IP network 20 may collectively set a channel to be used by each of the master portable TVWS devices 300 to 304. That is, each of the master portable TVWS devices 300 to 304 transmits the available channel information obtained from the TVWS DB server to the NMS server 100. The NMS server 100 compares and analyzes the available channel information transmitted from each of the master portable TVWS devices 300 to 304, and sets an available channel to be used by each of the master portable TVWS devices 300 to 304 to transmit the available channel to each of the master portable TVWS devices 300 to 304.

One or more slave portable TVWS devices 400 and 401 are mounted in the bus 500 to perform TVWS communication with the master portable TVWS devices 300 to 304. The slave portable TVWS devices 400 and 401 measures a strength indication of signals from each of the master portable TVWS devices 300 to 304 to select a best quality channel and use the best quality channel as a channel for data transmission. As another example, since a route of the bus is already fixed, the slave portable TVWS devices obtain channel information which is used for data transmission by the master portable TVWS device 300 to 304 which may be connected at the time of moving to a next location, from the NMS server 100, and use the channel as a channel for its own data transmission.

As described above, the slave portable TVWS devices 400 and 401 are connected to a backhaul through the TVWS communication and provide a LAN and wired communication service into the bus 500 so that information communication apparatuses equipped in the bus 500 may be connected to a network. For example, the location information of the bus may be transmitted to a traffic control server (not illustrated). Further, the slave portable TVWS devices are connected to a WiFi AP using LAN or wired communication so that a wireless WiFi service may be provided in the bus 500. By doing this, bus users may connect smart phones to the network using WiFi in the bus.

The slave portable TVWS devices 400 and 401 use the same channels used by the master portable TVWS devices 300 to 304 so that there is no need to obtain the available channel from the TVWS DB server and thus there is no need to obtain its own location information. Even though the bus 500 includes a GPS, the GPS is useless for the slave portable TVWS devices 400 and 401.

FIG. 2 is a view illustrating a configuration of master portable TVWS devices 300 to 304 according to an exemplary embodiment of the present disclosure.

Referring to FIG. 2, a master portable TVWS device 300 according to an exemplary embodiment of the present disclosure includes a TVWS interface 360 for TVWS band communication with slave portable TVWS devices 400 and 401, a GPS module 310 which receives a GPS signal to check a location, a network interface 320 which directly or indirectly connects the device to a TCP/IP network 20, a battery and power supply circuit 330 which supplies power obtained from an AC power or sunlight to the device, and a CPU 340 which controls the device and relays the data transmission between the plurality of interfaces included in the device. The CPU 340 includes a TCP/IP protocol stack and a router function to enable high speed data transmission between the plurality of interfaces.

Further, the device may further include a WiFi interface 350 which performs data communication with a WiFi terminal. The WiFi interface 350 may be used to provide a service to users of WiFi such as mobile phones near the master portable TVWS devices 300 to 304. That is, the WiFi interface may provide a WiFi service to people who wait for buses at the bus stop.

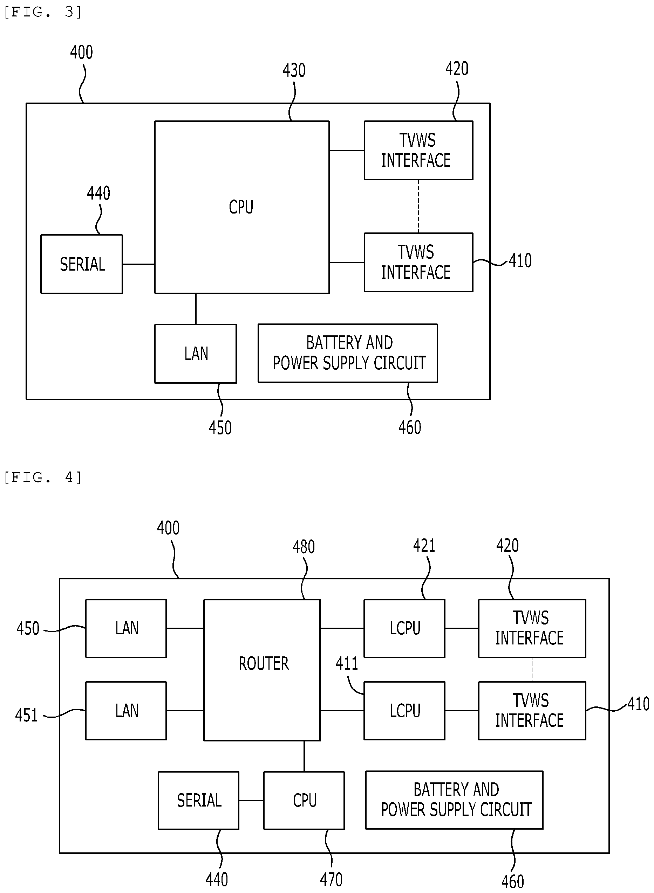

FIG. 3 is a view illustrating a configuration of slave portable TVWS devices 400 and 401 according to an exemplary embodiment of the present disclosure.

Referring to FIG. 3, slave portable TVWS devices 400 and 401 according to an exemplary embodiment of the present disclosure include a CPU 430 which controls the entire devices and performs data transmission between a plurality of interfaces in the devices, one or more TVWS interfaces 410, 420 which perform communication with the master portable TVWS devices 300 to 304 using a TVWS band, an LAN interface 450 which provides LAN connection, a serial interface 440 which provides serial data communication connection, and a battery and power supply circuit 460 which supplies power for the entire device.

The LAN interface 450 and the serial interface 440 may provide a communication service in the bus. That is, the information communication apparatus is connected to the LAN interface 450 and/or the serial interface 440 to transmit data through a wireless backhaul provided by the TVWS device. Further, the WiFi AP is connected to the LAN interface 450 and/or the serial interface 440 to provide the WiFi service so that a wireless communication service may be provided in the bus.

One or more TVWS interfaces 410 and 420 are simultaneously connected to the plurality of master portable TVWS devices 300 to 304 to provide a seamless wireless backhaul service. That is, one of two or more TVWS interfaces 410 and 420 is connected to a first master portable TVWS device which is currently in the vicinity of the bus on the route where the bus travels and the other one is connected to a second master portable TVWS device disposed ahead. Therefore, as the bus moves to the second master portable TVWS device disposed ahead along the route, the data transmission is naturally transferred from the first master portable TVWS device to the second master portable TVWS device. Therefore, the seamless wireless backhaul service may be provided.

The CPU 430 administrates data transmission between internal interfaces. Specifically, when a plurality of TVWS interfaces 410 and 420 is provided, the CPU may determine a TVWS interface which performs data transmission, based on a received signal strength indication received by each of the TVWS interfaces 410 and 420.

FIG. 4 is a view illustrating a configuration of slave portable TVWS devices 400 and 401 according to an exemplary embodiment of the present disclosure.

Referring to FIG. 4, a slave portable TVWS devices 400 and 401 according to another exemplary embodiment of the present disclosure includes a plurality of portable TVWS modules including TVWS interfaces 410 and 420 and local CPUs 411 and 421 (LCPU) having a TCP/IP protocol stack, a CPU 470 which controls a condition of the device, a serial interface 440 which is connected to the CPU 470 and provides serial data communication connection, a battery and power supply circuit 460 which supplies a power for the entire device, and a router 480 which performs a router function while providing LAN interfaces 450 and 451 for providing LAN connection to process TCP/IP data entering through a plurality of LAN/WAN ports and transmit the TCP/IP data to a desired destination.

The LAN interfaces provided by the router 480 and the serial interface 440 provided by the CPU 470 may provide a communication service in the bus. That is, the information communication apparatus is connected to the LAN interface and/or the serial interface 440 to transmit data through a wireless backhaul provided by the TVWS device. Further, the WiFi AP is connected to the LAN interface 450 and/or the serial interface 440 to provide the WiFi service so that a wireless communication service may be provided in the bus.

Further, the plurality of portable TVWS modules are simultaneously connected to the plurality of master portable TVWS devices 300 to 304 to provide a seamless wireless backhaul service. That is, one of the plurality of portable TVWS modules is connected to a first master portable TVWS device which is currently in the vicinity of the bus on the route where the bus travels and the other one is connected to a second master portable TVWS device disposed ahead. Therefore, the bus moves to the second master portable TVWS device disposed ahead along the route so that the data transmission is naturally transferred from the first master portable TVWS device to the second master portable TVWS device. Therefore, the seamless wireless backhaul service may be provided. In this case, the CPU 470 determines a TVWS module which performs the data transmission based on strength indications of signals received by the plurality of TVWS modules to notify the router 480.

The wireless backhaul system is provided using the master/slave portable TVWS devices as described above so that a data communication service may be provided in the bus. However, since the TVWS device uses a TV band, regulations thereof are severe. Specifically, the TVWS device needs to perform data communication using only an unused channel other than TV channels used for broadcasting in a region where the TVWS device is located. Therefore, regulatory authorities suggest technique standards and TVWS available channel database access conditions of the portable TVWS devices. According to regulations of the regulatory authorities, an error between a measured location and an actual location of the portable TVWS device needs to be within 50 m and available channel information needs to be newly obtained every 60 seconds except for the sleep mode and when the portable TVWS device moves more than 100 m from the current location.

To this end, the portable TVWS device may include a GPS receiver.

As illustrated in FIG. 1, the master portable TVWS devices 300 to 304 may be continuously disposed along the route of the bus. When the master portable TVWS devices are disposed as described above, the plurality of master portable TVWS devices 300 to 304 may be disposed in a predetermined space. Further, when the plurality of master portable TVWS devices uses the same channel, there may be an interference therebetween. In order to avoid the interference problem of the portable TVWS devices, the portable TVWS device may select the channel to be used using various methods which may remove the interference after obtaining the available channel information.

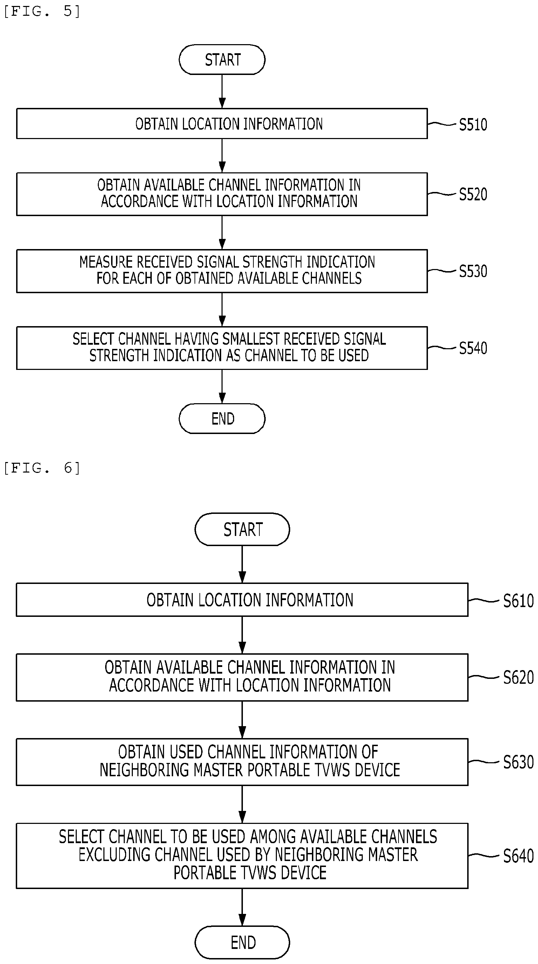

FIG. 5 is a view illustrating a method of selecting a channel to be used by a master portable TVWS device according to an exemplary embodiment of the present disclosure.

Referring to FIG. 5, according to a method of selecting a channel to be used by a master portable TVWS device according to an exemplary embodiment of the present disclosure, first, location information is obtained in step S510. The location information may be obtained by receiving a GPS signal using a GPS module 310. Available channel information is obtained in step S520 in accordance with the obtained location information. The available channel information may be obtained by transmitting an available channel information request message including the location information to a TVWS DB server 200 which is connected to a TCP/IP network 20 and receiving the available channel information from the TVWS DB server 200. Next, a received signal strength indication for each of the obtained available channels is measured in step S530. That is, in order to remove channels which are used by neighboring portable TVWS devices, a strength indication of a signal when a signal transmitted from the neighboring portable TVWS device is received is measured. Next, a channel having the smallest received signal strength indication among the available channels is selected as a channel to be used in step S540.

The master portable TVWS device may perform data communication using a channel having the smallest interference by using the above-described method.

FIG. 6 is a view illustrating a method of selecting a channel to be used by a master portable TVWS device according to still another exemplary embodiment of the present disclosure.

Referring to FIG. 6, in order to select a channel to be used by a master portable TVWS device according to another exemplary embodiment of the present disclosure, first, location information is obtained in step S610. As described above, the location information may be obtained by receiving a GPS signal using a GPS module 310. Available channel information is obtained in step S620 in accordance with the obtained location information. The available channel information may be obtained by transmitting an available channel information request message including the location information to a TVWS DB server 200 which is connected to a TCP/IP network 20 and receiving the available channel information from the TVWS DB server 200. Next, used channel information of a neighboring master portable TVWS device may be obtained in step S630. The information may be obtained by requesting the used channel information to the neighboring master portable TVWS device and receiving information on the used channel from the neighboring master portable TVWS device. Among remaining available channels obtained by excluding a channel which is used by the neighboring master portable TVWS device from the available channels obtained from the TVWS DB server 200, a channel to be used may be selected in step S640. In this case, when a transmission method such as frequency hopping is used, a plurality of channels may be selected as channels to be used. Further, differently from this, when a channel to be used is selected from the remaining available channels, as illustrated in FIG. 5, a received signal strength indication for each of available channels is measured and a channel having the smallest received signal strength indication may be selected as a channel to be used.

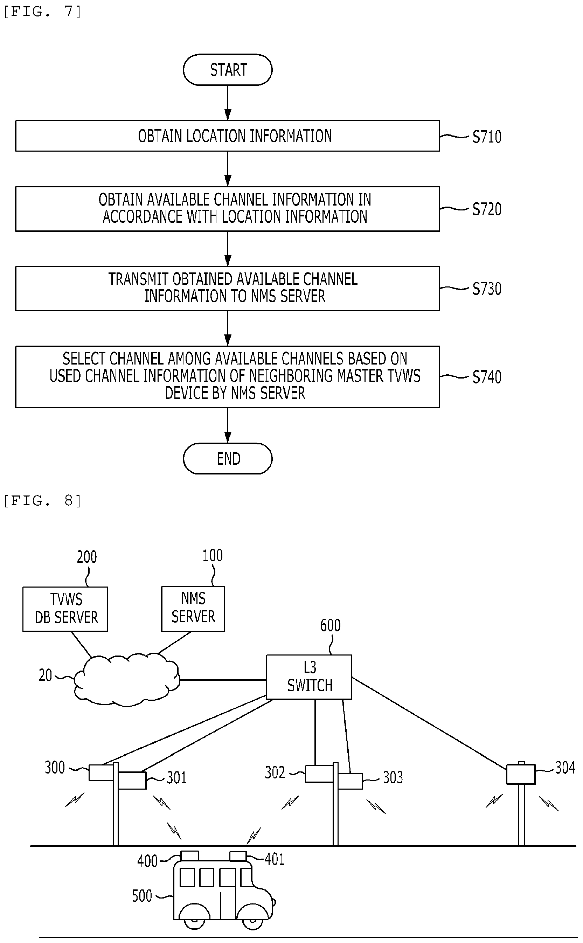

FIG. 7 is a view illustrating a method of selecting a channel to be used by a master portable TVWS device according to still another exemplary embodiment of the present disclosure.

Referring to FIG. 7, in order to select a channel to be used by a master portable TVWS device according to another exemplary embodiment of the present disclosure, first, location information is obtained in step S710. As described above, the location information may be obtained by receiving a GPS signal using a GPS module 310. Available channel information is obtained in step S720 in accordance with the obtained location information. The available channel information may be obtained by transmitting an available channel information request message including the location information to a TVWS DB server 200 which is connected to a TCP/IP network 20 and receiving the available channel information from the TVWS DB server 200. Next, the obtained available channel information may be transmitted to the NMS server 100 connected to the TCP/IP network 20 in step S730. The NMS server 100 may select a channel which may be used by the master portable TVWS device from the available channels of the master portable TVWS device based on information on the channel used by a master portable TVWS device near the corresponding master portable TVWS device.

In this case, the corresponding master portable TVWS device may transmit the received signal strength indication information of each available channel to the NMS server 100 during the step of transmitting available channel information to the NMS server 100 and the NMS server 100 may use the received signal strength indication information during the selecting of a channel to be used by the corresponding master portable TVWS device.

In order to correctly drive the backhaul system for providing a data service in the bus as suggested in the present disclosure, a slave portable TVWS device in the bus needs to be connected to another master portable TVWS device via several master portable TVWS devices. Therefore, handover for connecting the slave portable TVWS device to another master portable device without interruption of the data transmission is essential.

FIG. 8 is a view illustrating a configuration of a wireless backhaul system including an L3 switch for hand-over according to an exemplary embodiment of the present disclosure.

Referring to FIG. 8, a wireless backhaul system suggested by the present disclosure may further include an L3 switch 600 for handover at a previous stage of the TCP/IP network 20. The L3 switch may be a router. The slave portable TVWS device disposed in the bus may have its own fixed IP and communicate with one of a plurality of connected master portable TVWS devices 300 to 304 in accordance with a received signal strength indication of a signal received by the TVWS interface to transmit data. The L3 switch 600 updates and stores which master portable TVWS device transmits data with respect to the fixed IP of each of the slave portable TVWS devices at real time, and uses the stored master portable TVWS device information to transmit data to a specific slave portable TVWS device later. By doing this, the data communication is performed using the master portable TVWS device in accordance with selection of the slave portable TVWS device mounted in the bus so that the handover may be enabled without causing the loss of the IP packet.

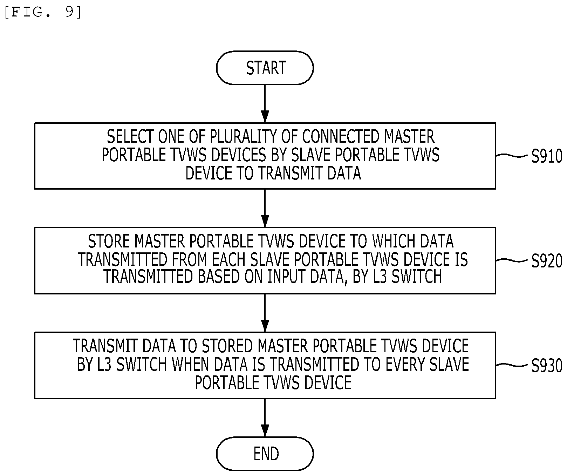

FIG. 9 is a view illustrating a method of performing handover in a wireless backhaul system according to an exemplary embodiment of the present invention.

Referring to FIG. 9, a slave portable TVWS device selects one of a plurality of connected master portable TVWS devices to transmit data thereto in step S910. That is, in an example of FIG. 8, the slave portable TVWS device is performing the data transmission using a master portable TVWS device 301. As the bus accesses a next bus stop, the received signal strength indication of the master portable TVWS device 302 is increased so that the slave portable TVWS device determines to transmit data using the master portable TVWS device 302 and then transmits the data through the master portable TVWS device 302. The L3 switch has stored the existing master portable TVWS device 301 as a master portable TVWS device used for data transmission by the slave portable TVWS device. After receiving data transmitted from the master portable TVWS device 302, the L3 switch updates a master portable TVWS device to the master portable TVWS device 302 to store the master portable TVWS device 302 in step S920. Thereafter, when the NMS server 100, the TVWS DB server 200, or other device connected by users in the bus receives data which is transmitted to the slave portable TVWS device, the L3 switch 600 is updated to transmit the data to the slave portable TVWS device using the master portable TVWS device 302 in step S930 so that natural handover is enabled.

As described above, the present disclosure relates to a wireless backhaul system using a portable TVWS device which uses TVWS communication to provide a communication service to buses and more particularly to a wireless backhaul system which uses a TV band at no charge and performs more flexible data transmission in a wider region than that of WiFi so that an operating cost is drastically saved.

The wireless backhaul system suggested by the present disclosure is used so that a data service required for a traffic control system of each bus stop, such as bus arrival information may also be provided.

The above description is made based on a public bus system which is operated in a general city, but is not limited thereto and may be used for SUVs, commercial vehicles, and taxi. In this case, the master portable TVWS device may be installed not in bus stops, but along the road. Further, the above-described backhaul system may also be applied to trams, subways, and monorail systems operated by lines.

Those skilled in the art should understand that the present disclosure is carried out in other specific form without departing from a technical spirit or essential characteristic so that the above-described exemplary embodiments are illustrative and but are not restrictive in all aspects. The scope of the present invention is represented by the claims to be described below rather than the detailed description, and it is to be interpreted that the meaning and scope of the claims and all the changes or modified forms derived from the equivalents thereof come within the scope of the present invention.

## Claims

1. A wireless backhaul system using TVWS band to provide data communication to a bus using a TV white space (TVWS) band, the system comprising:
a TVWS DB server which provides available TVWS channel information based on location information;
a plurality of master portable TVWS devices which is installed at fixed locations along a route of the bus; and
one or more slave portable TVWS devices installed in the bus,
wherein each of the plurality of master portable TVWS devices obtains location information, provides the obtained location information to the TVWS DB server to receive available TVWS channel information, selects a TVWS channel to be used based on the available TVWS channel information, and performs data transmission with the slave portable TVWS devices using the selected TVWS channel, and the one or more slave portable TVWS devices provides a data service to an information communication apparatus in the bus and performs data transmission with one master portable TVWS device among the plurality of master portable TVWS devices using a TVWS channel selected by the one master portable TVWS device.

2. The wireless backhaul system according to claim 1, wherein the master portable TVWS device includes:
a TVWS interface which performs data transmission and reception with the slave portable TVWS device using a TVWS channel;
a network interface which is connected to a TCP/IP network to perform data communication;
a GPS module which obtains location information based on a received GPS signal; and
a CPU which controls an operation of the master portable TVWS device and relays data transmission between the TVWS interface and the network interface.

3. The wireless backhaul system according to claim 2, wherein the master portable TVWS device further includes:
a WiFi interface which performs a WiFi AP function and performs data communication with a WiFi terminal.

4. The wireless backhaul system according to claim 1, wherein the slave portable TVWS device includes:
one or more TVWS interfaces which perform data transmission and reception with at least one of the plurality of master portable TVWS devices using a TVWS channel;
a serial interface which provides a data service to the information communication apparatus in the bus;
a LAN interface which provides a data service to the information communication apparatus in the bus; and
a CPU which manages the slave portable TVWS device and relays data transmission between one or more TVWS interfaces, the serial interface, and the LAN interface, and
the CPU selects one of the one or more TVWS interfaces based on a quality of a channel used by each of the one or more TVWS interfaces to transmit data to the selected TVWS interface but not to transmit data to the remaining TVWS interfaces.

5. The wireless backhaul system according to claim 1, wherein the slave portable TVWS device includes:
one or more TVWS modules which perform data transmission and reception with one of the plurality of master portable TVWS devices using a TVWS channel;
a router which provides one or more LAN interfaces providing a data service to the information communication apparatus in the bus and performs data routing between the one or more TVWS modules, the one or more LAN interfaces, and the CPU; and
a CPU which manages the slave portable TVWS device, provides a serial interface providing a data service to the information communication apparatus in the bus, and manages the routing of the router,
each of the one or more TVWS modules includes a TVWS interface which performs data transmission and reception using a TVWS channel and a local CPU which processes a TCP/IP protocol, and
the CPU manages the routing of the router such that one of the one or more TVWS modules is selected based on a quality of a channel used by each of the one or more TVWS modules to transmit data to the selected TVWS module but not to transmit to the remaining TVWS modules.

6. The wireless backhaul system according to claim 1, wherein the master portable TVWS device measures a received signal strength indication (RSSI) for each of available channels obtained from the TVWS DB server and selects an available channel having the smallest received signal strength indication as a TVWS channel to be used.

7. The wireless backhaul system according to claim 1, wherein the master portable TVWS device obtains TVWS channel information to be used from another master portable TVWS device of the plurality of master portable TVWS devices and selects one available channel among the remaining available channels excluding a TVWS channel used by another master portable TVWS device from the available channels obtained from the TVWS DB server as a TVWS channel to be used.

8. The wireless backhaul system according to claim 1, further comprising:
an NMS server which determines a TVWS channel to be used by the plurality of master portable TVWS devices,
wherein the master portable TVWS device transmits the available TVWS channel information received from the TVWS DB server to the NMS server and selects a TVWS channel which is determined and transmitted by the NMS server as the TVWS channel to be used.

9. The wireless backhaul system according to claim 1, further comprising:
an L3 switch which selects one of the plurality of master portable TVWS devices which performs data relay between the slave portable TVWS device and the TVWS DB server,
wherein the L3 switch stores a master portable TVWS device used by the slave portable TVWS device based on data transmitted from the slave portable TVWS device and selects the stored master portable TVWS device as a master portable TVWS device which performs data relay between the slave portable TVWS device and the TVWS DB server.

10. A method of selecting a TVWS channel to be used by a master portable TVWS device in the wireless backhaul system according to claim 1, the method comprising:
obtaining location information of the master portable TVWS device;
obtaining available channel information in accordance with the location information;
measuring a received signal strength indication for each of the obtained available channels; and
selecting an available channel having the smallest measured received signal strength indication as a TVWS channel to be used.

11. The method according to claim 10, wherein the obtaining of available channel information in accordance with the location information includes:
transmitting the location information to a TVWS DB server; and
receiving the available channel information from the TVWS DB server.

12. A method of selecting a TVWS channel to be used by a master portable TVWS device in the wireless backhaul system according to claim 1, the method comprising:
obtaining location information of the master portable TVWS device;
obtaining available channel information in accordance with the location information;
obtaining used channel information of other master portable TVWS device in the wireless backhaul system according to claim 1;
measuring a received signal strength indication for each of the remaining available channels excluding a channel used by the other master portable TVWS device from the available channels; and
selecting an available channel having the smallest measured received signal strength indication as a TVWS channel to be used.

13. A method of selecting a TVWS channel to be used by a master portable TVWS device in the wireless backhaul system according to claim 8, the method comprising:
obtaining location information of the master portable TVWS device;
obtaining available channel information in accordance with the location information;
transmitting the available channel information to an NMS server;
selecting a channel to be used by the master portable TVWS device based on the available channel information and a channel used by another master portable TVWS device in the wireless backhaul system according to claim 8, by the NMS server;
transmitting a selected channel to be used by the master portable TVWS device, by the NMS server; and
selecting the transmitted channel as a TVWS channel to be used.

14. The method according to claim 13, further comprising:
measuring a received signal strength indication for each of the obtained available channels;
wherein the transmitting of the available channel information to an NMS server includes:
transmitting the available channel information and the received signal strength indication measured for every available channel to the NMS server, and
the selecting of a channel to be used by the master portable TVWS device, by the NMS server includes:
selecting an available channel having the smallest received signal strength indication measured for each of the remaining available channels excluding a channel used by another master portable TVWS device from the available channels as a channel to be used by the master portable TVWS device.

15. A method of selecting a master portable TVWS device which performs data relay between a slave portable TVWS device and a TVWS DB server in an L3 switch, in the wireless backhaul system according to claim 9, the method comprising:
storing a master portable TVWS device (hereinafter, referred to as a first master portable TVWS device) used for data transmission by each slave portable TVWS device based on data transmitted from each slave portable TVWS device;
selecting the stored first master portable TVWS device as a master portable TVWS device which performs data relay between a slave portable TVWS device and a TVWS DB server; and
storing and updating a second master portable TVWS device when the master portable TVWS device (the second master portable TVWS device) used for data transmission by each slave portable TVWS device is different from the first master portable TVWS device based on data transmitted from the slave portable TVWS device.
